Europäisches Patentamt

European Patent Office

Office européen des brevets

(19)

(11) **EP 1 184 857 A2**

(12) **EUROPEAN PATENT APPLICATION**

(43) Date of publication:
06.03.2002 Bulletin 2002/10

(51) Int Cl.$^7$: **G11B 7/135**, G11B 7/12

(21) Application number: 01306848.1

(22) Date of filing: 10.08.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 10.08.2000 JP 2000242648

(71) Applicant: **Mitsumi Electric Company Ltd.**
**Chofu-shi Tokyo (JP)**

(72) Inventors:
• **Negoro, Kenichi, c/o Mitsumi Electric Co. Ltd.**
  **Atsugi-shi, Tokyo (JP)**
• **Kan, Kenji, c/o Mitsumi Electric Co. Ltd.**
  **Atsugi-shi, Tokyo (JP)**

(74) Representative: **Moir, Michael Christopher et al**
**Mathys & Squire 100 Gray's Inn Road**
**London WC1X 8AL (GB)**

(54) **Optical pickup unit**

(57)    A rising mirror (MIR') reflects a laser beam produced by a semiconductor laser (LD') by a reflecting surface thereof to make the laser beam converge on a signal recording surface of an optical disc (Disc) through an objective lens (OL') and reflects a return beam from the signal recording surface to make a photodetector (PD) detect the return beam. A rising angle (θ') between the reflecting surface of the rising mirror (MIR') and the pickup's lower surface is smaller than 45 degrees. With this structure, optical parts including the semiconductor laser and the photodetector may be arranged in an optical base (OB) with the optical parts inclined to the optical base so that the optical parts are not jutted out the pickup's lower surface downwards.

FIG. 6

## Description

Background of the Invention:

This invention relates to an optical pickup unit, which is contained in an optical disc drive, for recording/reproducing data in/from an optical recording medium such as an optical disc.

In the manner known in the art, an optical pickup unit is a unit for converging a laser beam produced by a semiconductor laser serving as an optical source on a signal recording surface of an optical disc through an objective lens and for detecting a return beam from the signal recording surface by a photodetector serving as optical detecting means.

In the manner which will later be described in conjunction with Figs. 1 and 2, an existing optical pickup unit comprises a semiconductor laser (laser diode), a diffraction grating, a beam splitter, a collimator lens, a rising mirror, an objective lens, a concave lens (enlargement lens), a photodetector (light receiving element), and a forward sensor. A rising or included angle between a reflecting surface of the rising mirror and a pickup's lower surface is equal to 45 degrees. Inasmuch as the photodetector cannot be miniaturized in the manner which will later be described in conjunction with Figs. 3A, 3B, 4, and 5, it is difficult to make the existing optical pickup unit thin.

In recent years, it has been advanced to make the optical disc drive thin. Accompanied with this, it is necessary for the optical pickup unit to make it thin. In order to make the optical pickup unit thin, a light emitting/receiving unit integrally comprising a semiconductor laser, a photodetector, a diffraction grating, and a hologram element is well used.

In addition, means for further making the optical pickup unit thin by using the light emitting/receiving unit is disclosed in Japanese Unexamined Patent Publications Tokkai Nos. Hei 10-177733 and 8-36779 or JP-A 10-177733 and JP-A 08-036779.

In JP-A 10-177733, an included angle between a reflecting surface of reflecting means and a recording surface of an optical recording medium is smaller than 45 degrees. In JP-A 08-036779, a rising mirror has a rising angle smaller than 45 degrees.

However, such a light emitting/receiving unit is disadvantageous in that it is expensive. On the other hand, the optical pickup unit using general-purpose optical parts is advantageous in that it is not expensive in comparison with the optical pickup unit using the light emitting/receiving unit. This is because the general-purpose optical parts are not costly.

Summary of the Invention:

It is therefore an object of this invention to provide an optical pickup unit which is capable of making the optical pickup unit thin by using generally commercially available general-purpose optical parts.

Other objects of this invention will become clear as the description proceeds.

The present invention provides an optical pickup unit comprising an objective lens for focussing a laser beam produced by a semiconductor laser on to a signal recording surface of an optical disc, and reflecting means for reflecting said laser beam from said laser towards said signal recording surface and for reflecting a return beam from said signal recording surface on to a photodetector, characterised in that a reflecting surface of said reflecting means is inclined relative to a principal axis of the objective lens by an angle greater than 45°.

Preferably, said laser and said photodetector are disposed on a common plane, said plane being located above and inclined to an optical base plane which is normal to said principal axis and tangential to a bottom surface of said reflecting means such that said laser and said photodetector do not protrude below said optical base plane.

The unit preferably further comprises a diffraction grating for separating said laser beam produced by said laser into a number of laser beams, a beam splitter for receiving both said laser beams from said diffraction grating and said return beam, a collimator lens disposed between said beam splitter and said reflecting means for receiving a beam reflected by said beam splitter, and a concave lens disposed between said beam splitter and said photodetector, each of said diffraction grating, said beam splitter, said collimator lens and said concave lens being arranged on said common plane so as not to protrude below said optical base plane.

The unit also preferably comprises a forward sensor for receiving and monitoring an amount of said laser beam produced by said laser which is passed through said beam splitter, said sensor being arranged on said common plane so as not to protrude below said optical base plane.

Another aspect of the present invention provides an optical pickup unit for converging a laser beam produced by a semiconductor laser on a signal recording surface of an optical disc through an objective lens by reflecting the laser beam by a reflecting surface of a rising mirror and is for detecting a return beam from the signal recording surface by a photodetector by reflecting the return beam by the reflecting surface of the rising mirror, characterised in that:

a rising angle between the reflecting surface of said rising mirror and a pickup's lower surface is smaller than 45 degrees; and optical parts including said semiconductor laser and said photodetector are arranged on an optical base with said optical parts inclined to said optical base so that said optical parts do not project downwards from a lower surface of said pickup.

The afore-mentioned optical pickup unit further may comprise, as the optical parts, a diffraction grating for separating the laser beam produced by the semiconductor laser into three laser beams, a beam splitter for reflecting the three laser beams from the diffraction grating and for transmitting the return beam, a collimator lens disposed between the beam splitter and the rising mirror, and a concave lens disposed between the beam splitter and the photodetector. In addition, the aforementioned optical pickup unit further may comprises, as one of the optical parts, a forward sensor for monitoring a light amount of the laser beam which is produced by the semiconductor laser and which is partially transmitted through the beam splitter.

Brief Description of the Drawing:

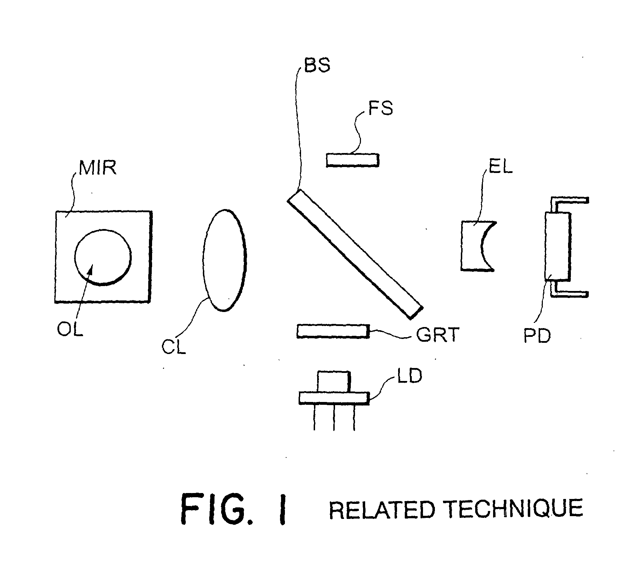

Fig. 1 is a plan view showing an optical system of an existing optical pickup unit;

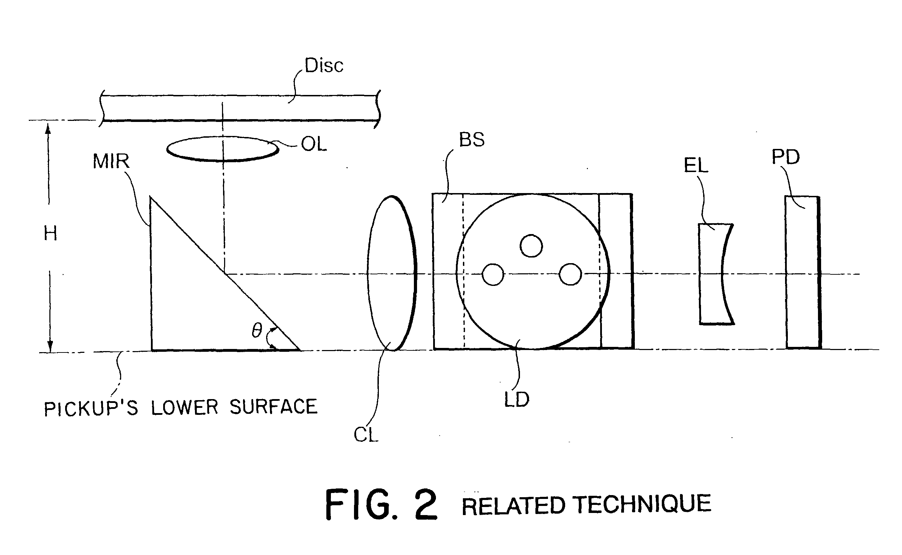

Fig. 2 is a front view showing the optical system of the existing optical pickup unit illustrated in Fig. 1;

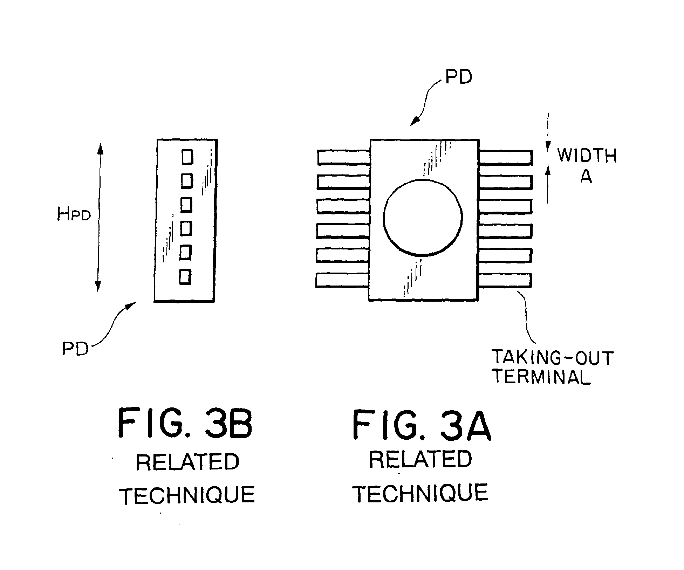

Figs. 3A and 3B are front and left-hand side views of a photodetector for use in an optical pickup unit, respectively;

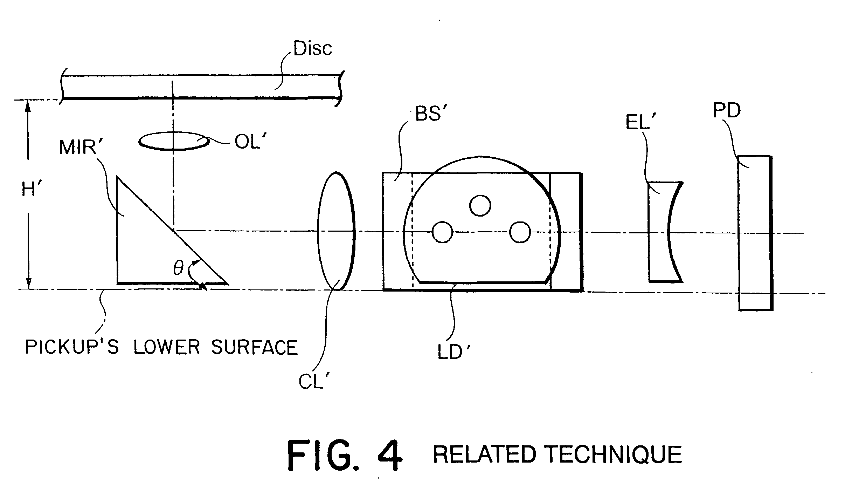

Fig. 4 is a front view showing an optical system of an existing thin optical pickup unit in which optical parts except for the photodetector are miniaturized;

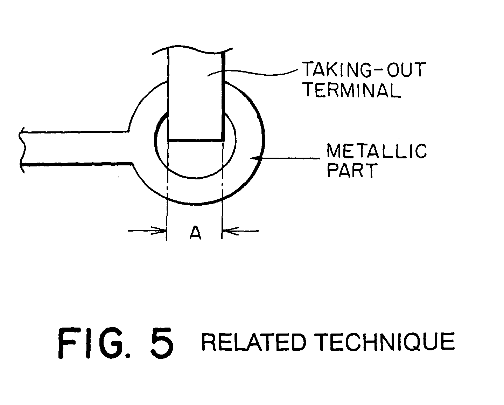

Fig. 5 is an enlarged fragmentary view of a taking-out terminal of the photodetector illustrated in Figs. 3A and 3B and a hole and a metallic part of a flexible printed circuit board (FPC);

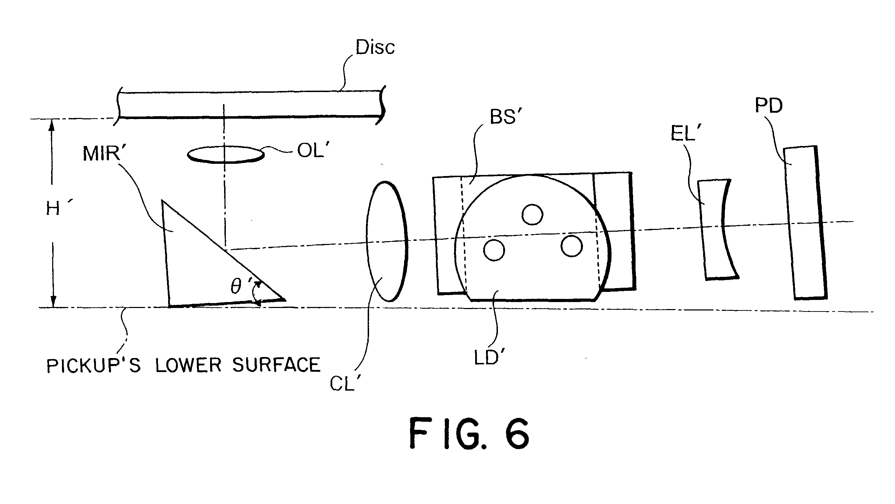

Fig. 6 is a front view showing an optical system of an optical pickup unit according a preferred embodiment of this invention;

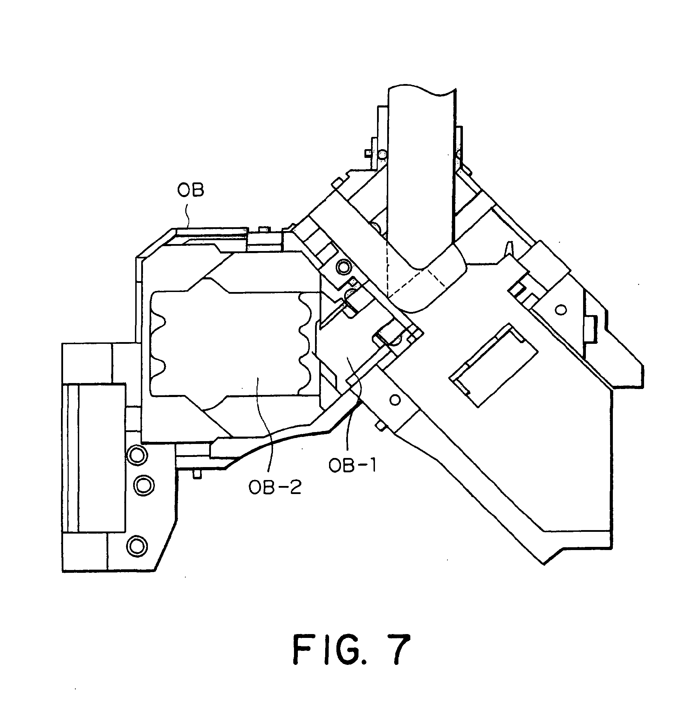

Fig. 7 is a plan view of an optical base for use in the optical pickup unit illustrated in Fig. 6; and

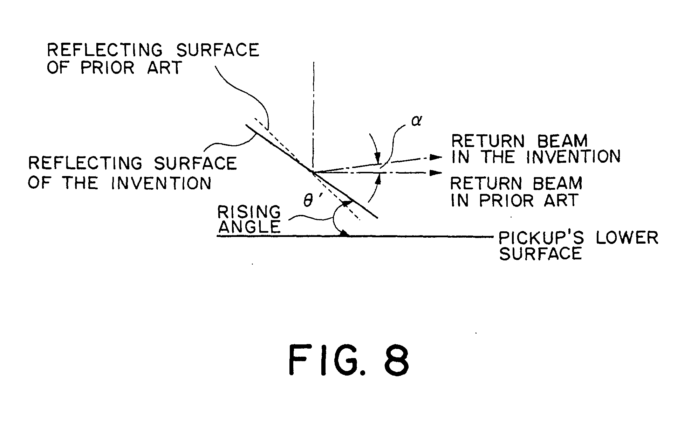

Fig. 8 is a view showing a relationship between a rising angle of a reflecting surface of a rising mirror shown in Fig. 6 and a rising angle of a reflecting surface of a rising mirror shown in Fig. 4.

Description of the Preferred Embodiment:

Referring to Figs. 1 and 2, an existing optical pickup unit will be described at first in order to facilitate an understanding of the present invention. Fig. 1 is a plan view showing an optical system of the existing optical pickup unit while Fig. 2 is a front view showing the optical system of the existing optical pickup unit.
The illustrated optical pickup unit comprises a semiconductor laser (laser diode) LD, a diffraction grating GRT, a beam splitter BS, a collimator lens CL, a rising mirror MIR, an objective lens OL, a concave lens (enlargement lens) EL, a photodetector (light receiving element) PD, and a forward sensor FS. In addition, a reference symbol of Disc designates an optical disc.
In the optical pickup unit with such a structure, disposed this side, the semiconductor laser LD radiates a laser beam in the horizontally forward direction. The outgoing laser beam is separated into three laser beams by the diffraction grating GRT and is bent at a right angle by the beam splitter BS to go horizontally leftward. In addition, the beam splitter BS separates the incident laser beam into a reflected beam and a transmitted beam at a constant ratio. For example, the beam splitter BS reflects 80% of the incident laser beam as the reflected beam and transmits 20% of the incident laser beam as the transmitted beam. The forward sensor FS is also called a front monitor and is for monitoring a light amount the transmitted beam from the beam splitter BS. The laser beam, which goes horizontally leftward, is collimated into a collimated beam by the collimator lens CL and thereafter is bent at a right angle by reflecting at a reflecting surface of the rising mirror MIR to go vertically upward. The laser beam, which goes vertically upward, is converged (irradiated) on a signal recording surface of the optical disc Disc through the objective lens OL.
Reflected by the signal recording surface of the optical disc Disc, a reflected beam (return beam) goes vertically downward, passes through the objective lens OL, and is bent at a right angle by reflecting the reflecting surface of the rising mirror MIR to go horizontally rightward. The laser beam, which goes horizontally rightward, is detected by the photodetector PD through the collimator lens CL, the beam splitter BS, and the concave lens EL.
In addition, in the manner as apparent from Fig. 2, the semiconductor laser LD, the beam splitter BS, the collimator lens CL, the rising mirror MIR, and the photodetector PD are disposed upper than a lower surface of the optical pickup unit (which will be called a pickup's lower surface). In addition, optical parts such as the semiconductor laser LD, the diffraction grating GRT, the beam splitter BS, the collimator lens CL, the rising mirror MIR, the concave lens EL, the photodetector PD, and the forward sensor FS are held in an optical base (not shown). Furthermore, the objective lens OL is held by a lens holder (not shown) which is supported to the optical base so as to be slightly movable. The pickup's lower surface is a lower surface of the optical base. At any rate, in the existing optical pickup unit, the rising mirror MIR is disposed so that the reflecting surface of the rising mirror MIR is inclined to the pickup's lower surface by 45 degrees. In other words, a rising or included angle θ between the reflecting surface of the rising mirror MIR and the pickup's lower surface is equal to 45 degrees.
The optical pickup unit with such a structure is moved in a predetermined disk radial direction for the optical disc Disc by a pickup driving portion (not shown). That is, the optical pickup unit is slidably supported on a chassis (not shown) of an optical disc drive. An upper surface of the chassis and the pickup's lower surface are arranged with mere a little space left therebetween. Accordingly, it is not preferable that the above-mentioned optical parts are projected into downwards lower than the pickup's lower surface (the lower surface of the optical base). In addition, it is possible to use generally commercially available general-purpose optical parts as the above-mentioned optical parts.

As described above, in the existing optical pickup unit having a structure in which the semiconductor laser LD and the photodetector PD are separately arranged with each other, to make the height measure H of the optical pickup unit small must lower heights of the beam splitter BS, the rising mirror MIR, and the photodetector PD and must minimize external forms of the objective lens OL. the collimator lens CL, concave lens EL, and the laser diode (semiconductor laser) LD.

Among the optical parts, the beam splitter BS and the rising mirror MIR have almost material of glass and have hardly restrictions for cutting. As a result, it is possible for the beam splitter BS and the rising mirror MIR to relatively easily lower the heights thereof. In addition, the objective lens OL, the collimator lens CL, and the concave lens EL have almost material of glass or plastic and are formed by a press method or a molding method. Accordingly, it is also possible for the objective lens OL, the collimator lens CL, and the concave lens EL to minimize the external forms thereof and to lower the heights thereof by cutting them at a side of the lower surface of the optical pickup unit. Furthermore, although the laser diode (semiconductor laser) LD normally has an external form of a diameter $\phi$ of 5.6mm, a laser diode having an external form of D-shape where a part thereof is cut is also commercially available. Accordingly, it is possible for the laser diode to relatively easily lower the height thereof.

On the other hand, the photodetector PD has a plurality of signal taking-out pins (taking-out terminals) which are arranged with a constant gap (pitch) horizontally, as shown in Figs. 3A and 3B. Accordingly, in order to lower a height $H_{PD}$ of the photodetector PD, the pitch between the pins must be narrowed and/or the number of pins must be decreased. However, in the manner which will later be described, caused by a problem about packaging and a problem of characteristic, it is impossible for the photodetector PD to easily lower the height $H_{PD}$ thereof by narrowing the pitch between the pins and by decreasing the number of the pins.

As a result, when the existing optical pickup unit is simply made thin (miniaturized), a thin optical pickup unit must have a structure as shown in Fig. 4.

In Fig. 4, reference symbols of LD', BS', CL', MIR', OL', and EL' designate a semiconductor laser, a beam splitter, a collimator lens, a rising mirror, an objective lens, and a concave lens, respectively, which miniaturize the corresponding those illustrated in Fig. 2. A rising or included angle θ between the pickup's lower surface and a reflecting surface of the rising mirror MIR' is also equal to 45 degrees. The thin optical pickup unit has a height measure H' which is lower than the height measure H shown in Fig. 2, namely, H' < H. That is, as mentioned before, inasmuch as only the photodetector PD among the optical parts cannot be miniaturized (that is, the height $H_{PD}$ thereof cannot be lowered), the photodetector PD has a lower part which is projected (jutted out) downwards lower than the pickup's lower surface. As described above, the optical pickup unit is slidably supported on the chassis of the optical disk drive and the chassis's upper surface and the pickup's lower surface are arranged with mere the little space left therebetween. Therefore, as a result, it is difficult to make the optical pickup unit thin.

Referring now to Figs. 3A and 3B, the description will be made as regards the reasons why the photodetector PD cannot be miniaturized more detail. Fig. 3A is a front view of the photodetector PD. Fig. 3B is a left-hand side view of the photodetector PD.

Each of the taking-out terminals (pins) of the photodetector PD is made of metal. Aluminum is well used as material of the metal for the taking-out terminals (pins). The taking-out terminals (pins) of the photodetector PD are bent at about 90 degrees as shown in Fig. 1. The photodetector PD is mounted on a printed circuit board or a flexible printed circuit board (FPC) with the taking-out terminals (pins) inserted in the printed circuit board or the flexible printed circuit board.

In the optical pickup unit, the photodetector PD often may be mounted on the flexible printed circuit board (FPC) so that the taking-out terminals (pins) pass through holes bored through the flexible printed circuit board and are soldered to the flexible printed circuit board. In this event, as shown in Fig. 5, each hole of the flexible printed circuit board has a diameter which is larger than a width A of the taking-out terminal (which includes tolerance) and the flexible printed circuit board must have a metallic part to be soldered around each hole.

Accordingly, if a distance (pitch) between adjacent taking-out terminals is shortened, possibility to short-circuit becomes high so that adjacent metallic parts of the flexible printed circuit board may overlap each other and solder may be in contact with an adjacent taking-out terminal.

On the other hand, if the width A of the taking-out terminal is shortened, sufficient strength is not obtained because the taking-out terminal is fine. Accordingly, possibility that slip may occur becomes high only when slight force applies to the taking-out terminals after the taking-out terminals are soldered to the flexible printed circuit board.

For these reasons, it is impossible to lower the height HPD of the photodetector PD by shortening the width A of the taking-out terminal and the distance (pitch) between the adjacent taking-out terminals.

Referring to Fig. 6, the description will proceed to a thin optical pickup unit according to a preferred embodiment of this invention. The illustrated optical pickup unit is similar in structure and operation to the existing thin optical pickup unit illustrated in Fig. 4 except that a rising or included angle θ' of the reflecting surface of the rising mirror MIR' is different from the rising or included angle θ of the reflecting surface of the rising mirror MIR' illustrated in Fig. 4 and arrangement of the optical parts is different from that illustrated in Fig. 4 as will later become clear.

More specifically, the rising or included angle θ' between the reflecting surface of the rising mirror MIR' and the pickup's lower surface is smaller than 45 degrees. In addition, as shown in Fig. 6, the optical parts comprising the semiconductor laser LD', the photodetector PD, the diffraction grating GRT, the beam splitter BS', the collimator lens CL', the concave lens EL', and the forward sensor FS are arranged with these optical parts inclined for an optical base OB shown in Fig. 7 so that these optical parts are not jutted out the pickup's lower surface downwards.

In Fig. 7, the optical base OB has a first opening OB-1 and a second opening OB-2. The first opening OB-1 is for ensuring a first space for receiving the rising mirror MIR'. The second opening OB-2 is for ensuring a second space for receiving a lens holder (not shown). The lens holder movably holds the objective lens OL' in both of a direction of an optical axis and a direction perpendicular to the optical axis. In addition, the objective lens OL' held in the lens holder is positioned just above the rising mirror MIR' or in an area of the first opening OB-1.

Fig. 8 illustrates a relationship between the rising angle θ' of the reflecting surface of the rising mirror MIR' shown in Fig. 6 and the rising angle θ of the reflecting surface of the rising mirror MIR' shown in Fig. 4. Inasmuch as the rising angle θ of the reflecting surface of the rising mirror MIR' in the existing thin optical pickup unit is equal to 45 degrees, an optical axis of both of an incident laser beam for the rising mirror MIR' and a return beam reflected by the rising mirror MIR' is parallel to the pickup's lower surface.

On the other hand, inasmuch as the rising angle θ' of the reflecting surface of the rising mirror MIR' in the thin optical pickup unit according to this invention is smaller than 45 degrees, an optical axis of both of an incident laser beam for the rising mirror MIR' and a return beam reflected by the rising mirror MIR' inclines to upwards for the pickup's lower surface by an angle α. This angle α is represented by as follows:

$$\alpha = 90° - 2\theta'.$$

As a result, although the photodetector PD cannot be miniaturized, it is possible to arrange the optical parts such as the semiconductor laser LD', the photodetector PD, the diffraction grating GRT, the beam splitter BS', the collimator lens CL', the concave lens EL', and the forward sensor FS in the optical base OB (Fig. 7) so that these optical parts are not jutted out the pickup's lower surface downwards. Accordingly, it is possible to make the optical pickup unit thin.

Referring now to Fig. 6, description will be made as regards operation of the thin optical pickup unit illustrated in Fig. 6

Disposed this side, the semiconductor laser LD' radiates a laser beam in a forward direction with the laser beam inclined to downwards for a horizontal surface (the pickup's lower surface) by the angle α. The outgoing laser beam is separated into three laser beams by the diffraction grating GRT (Fig. 1) and is bent at a right angle by the beam splitter BS' to go leftward with the three laser beams inclined to downwards for the horizontal surface by the angle α. In addition, the beam splitter BS' separates the incident laser beam into a reflected beam and a transmitted beam at a constant ratio. For example, the beam splitter BS' reflects 80% of the incident laser beam as the reflected beam and transmits 20% of the incident laser beam as the transmitted beam. The forward sensor FS (Fig. 1) monitors a light amount of the transmitted beam from the beam splitter BS'. The laser beam, which goes leftward with inclined to downwards for the horizontal surface by the angle α, is collimated into a collimated beam by the collimator lens CL' and thereafter is bent at a right angle by reflecting at the reflecting surface of the rising mirror MIR' to go vertically upward. The laser beam, which goes vertically upward, is converged (irradiated) on a signal recording surface of the optical disk Disk through the objective lens OL'.

Reflected by the signal recording surface of the optical disk Disk, a reflected beam (return beam) goes vertically downward, passes through the objective lens OL', and is bent at a right angle by reflecting the reflecting surface of the rising mirror MIR' to go rightward with the return beam inclined to upwards for the horizontal surface by the angle α. The return beam, which goes rightward with inclined to upwards for the horizontal surface by the angle α, is detected by the photodetector PD through the collimator lens CL', the beam splitter BS', and the concave lens EL'.

While this invention has thus far been described in conjunction with a preferred embodiment thereof, it will now be readily possible for those skilled in the art to put this invention into various other manners. That is, the thin optical pickup unit according to this invention may have any structure in which the semiconductor laser and the photodetector are separated to each other and the thin optical pickup unit is provided with the rising mirror and the objective lens. Accordingly, the optical parts may not be restricted to the above-mentioned ones.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

A rising mirror (MIR') reflects a laser beam produced by a semiconductor laser (LD') by a reflecting surface thereof to make the laser beam converge on a signal recording surface of an optical disc (Disc) through an objective lens (OL') and reflects a return beam from the signal recording surface to make a photodetector (PD) detect the return beam. A rising angle (θ') between the reflecting surface of the rising mirror (MIR') and the pickup's lower surface is smaller than 45 degrees. With this structure, optical parts including the semiconductor laser and the photodetector may be arranged in an optical base (OB) with the optical parts inclined to the optical base so that the optical parts are not jutted out the pickup's lower surface downwards.

**Claims**

1. An optical pickup unit for converging a laser beam produced by a semiconductor laser (LD') on a signal recording surface of an optical disc (Disc) through an objective lens (OL') by reflecting said laser beam by a reflecting surface of a rising mirror (MIR') and for detecting a return beam from said signal recording surface by a photodetector (PD) by reflecting said return beam by the reflecting surface of said rising mirror, **characterised in that**:

   a rising angle (θ') between the reflecting surface of said rising mirror and a pickup's lower surface is smaller than 45 degrees; and optical parts including said semiconductor laser and said photodetector are arranged on an optical base (OB) with said optical parts inclined to said optical base so that said optical parts do not project downwards from a lower surface of said pickup.

2. An optical pickup unit as claimed in Claim 1, wherein said optical pickup unit further comprises, as said optical parts, a diffraction grating (GRT) for separating said laser beam produced by said semiconductor laser into three laser beams, a beam splitter (BS') for reflecting said three laser beams from said diffraction grating and for transmitting said return beam, a collimator lens (CL') disposed between said beam splitter and said rising mirror, and a concave lens (EL') disposed between said beam splitter and said photodetector.

3. An optical pickup unit as claimed in claim 2, wherein said optical pickup unit further comprises, as one of said optical parts, a forward sensor (FS) for monitoring a light amount of the laser beam which is produced by said semiconductor laser and which is partially transmitted through said beam splitter.

4. An optical pickup unit comprising an objective lens (OL') for focussing a laser beam produced by a semiconductor laser (LD') on to a signal recording surface of an optical disc (Disc), and reflecting means (MIR') for reflecting said laser beam from said laser towards said signal recording surface and for reflecting a return beam from said signal recording surface on to a photodetector (PD), **characterised in that** a reflecting surface of said reflecting means is inclined relative to a principal axis of the objective lens by an angle (90° - θ') greater than 45°.

5. An optical pickup unit as claimed in Claim 4, wherein said laser and said photodetector are disposed on a common plane, said plane being located above and inclined to an optical base plane which is normal to said principal axis and tangential to a bottom surface of said reflecting means such that said laser and said photodetector do not protrude below said optical base plane.

6. An optical pickup unit as claimed in Claim 4 or 5, further comprising a diffraction grating (GRT) for separating said laser beam produced by said laser into a number of laser beams, a beam splitter (BS') for receiving both said laser beams from said diffraction grating and said return beam, a collimator lens (CL') disposed between said beam splitter and said reflecting means for receiving a beam reflected by said beam splitter, and a concave lens (EL') disposed between said beam splitter and said photodetector, each of said diffraction grating, said beam splitter, said collimator lens and said concave lens being arranged on said common plane so as not to protrude below said optical base plane.

7. An optical pickup unit as claimed in Claim 6, further comprising a forward sensor for receiving and monitoring an amount of said laser beam produced by said laser which is passed through said beam splitter, said sensor being arranged on said common plane so as not to protrude below said optical base plane.

BS

FS

MIR

EL

OL

CL

GRT

PD

LD

# FIG. 1 RELATED TECHNIQUE

FIG. 2    RELATED TECHNIQUE

EP 1 184 857 A2

$H_{PD}$

PD

**FIG. 3B**
RELATED
TECHNIQUE

PD

WIDTH
A

TAKING-OUT
TERMINAL

**FIG. 3A**
RELATED
TECHNIQUE

FIG. 4  RELATED TECHNIQUE

EP 1 184 857 A2

TAKING-OUT
TERMINAL

METALLIC
PART

A

**FIG. 5** RELATED TECHNIQUE

Disc

MIR'  OL'  BS'  EL'  PD

H'

θ'

PICKUP'S LOWER SURFACE

CL'

LD'

# FIG. 6

EP 1 184 857 A2

FIG. 7

REFLECTING SURFACE
OF PRIOR ART

REFLECTING SURFACE
OF THE INVENTION

$\alpha$

RETURN BEAM
IN THE INVENTION

RETURN BEAM
IN PRIOR ART

$\theta'$

RISING
ANGLE

PICKUP'S LOWER
SURFACE

# FIG. 8